# EUROPÄISCHE PATENTSCHRIFT

(11) **EP 4 338 927 B1**
(45) Veröffentlichungstag und Bekanntmachung des Hinweises auf die Patenterteilung: **20.08.2025**
(21) Anmeldenummer: 23192984.5
(22) Anmeldetag: 23.08.2023
(51) Int. Cl.: B29C 48/02, B29C 48/06, B29C 48/25, B29C 48/395, B29C 65/12

(54) **HANDSCHWEISSEXTRUDER SOWIE ADAPTER FÜR EIN HANDSCHWEISSEXTRUDER**
HAND WELDING EXTRUDER AND ADAPTER FOR A HAND WELDING EXTRUDER
EXTRUDEUSE DE SOUDAGE À LA MAIN ET ADAPTATEUR POUR UNE EXTRUDEUSE DE SOUDAGE À LA MAIN

(30) Priorität: 15.09.2022 DE 102022123610
(43) Veröffentlichungstag der Anmeldung: 20.03.2024
(73) Patentinhaber: Dohle Extrusionstechnik GmbH, 53809 Ruppichteroth (DE)
(72) Erfinder: Maus, Hartmut, 51545 Waldbröl (DE)
(74) Vertreter: Duda, Rafael Thomas

(56) Entgegenhaltungen:
- EP-A1- 1 634 688
- DE-U1- 202013 104 151
- US-B2- 10 086 548

## Beschreibung

Die vorliegende Erfindung betrifft einen Adapter für einen Handschweißextruder, der vorzugsweise an dem Handschweißextruder anbringbar und für die Zufuhr von Granulat zu diesem vorgesehen ist, sowie einen Handschweißextruder umfassend den erfindungsgemäßen Adapter.

Handschweißextruder für thermoplastische Kunststoffe sind grundsätzlich aus dem Stand der Technik bekannt und werden beispielsweise in der DE 199 52 166 A1 beschrieben. Bei diesem Typ eines Handschweißextruders wird ein Kunststoffschweißdraht verarbeitet, welcher zunächst über eine Fördereinrichtung eingezogen, sodann zerkleinert und im Bereich der Extruderschnecke erwärmt sowie aufgeschmolzen wird. Für den Schweißvorgang wird das aufgeschmolzene Kunststoffmaterial anschießend über einen Schweißschuh ausgegeben. Diese Handschweißextruder können unabhängig von ihrer jeweiligen Positionierung im Raum arbeiten, das heißt das Gehäuse kann liegend, stehend oder geneigt angeordnet sein, so dass es beim Arbeiten mit dem Gerät keine diesbezüglichen geometrischen Einschränkungen gibt.

Daneben existieren Handschweißextruder, bei denen ein Kunststoffgranulat verarbeitet wird. Bei denjenigen Handschweißextrudern, welche Granulat verarbeiten, erfolgt die Beschickung der Extruderschnecke typischerweise ohne eine Zwangsführung, d.h. unter der Bedingung der Schwerkraft, weshalb der Granulatbehälter, der den Granulatvorrat enthält, in seiner Position und seiner Lage relativ zur Extruderschnecke so ausgerichtet sein muss, dass ein selbstständiges Nachrieseln des Granulats gewährleistet ist. Dies schränkt bislang die Einsatzmöglichkeiten dieses Gerätetyps stark ein.

Aus der DE 20 2013 104 151 U1 ist zudem ein Handschweißextruder bekannt, mittels dessen man wahlweise strangförmiges oder granulares Kunststoffmaterial plastifizieren und verarbeiten kann. Dieser verfügt umfasst einen Trichter für granulares Kunststoffmaterial und kann aufgrund einer spezifischen Ausbildung des Getriebes für die Verarbeitung von strangförmigem Kunststoffmaterial (Kunststoff-Schweißdraht) umgerüstet werden.

Weiterhin ist aus der DE 20 2006 002 327 U1 eine manuell handhabbare Schweißvorrichtung mit einem an einem Heißluftauslass eines Heißluftgebläses abnehmbar befestigbaren Schweißschuh bekannt. Dieser weist eine einends durch einen Heißluftstrom des Heißluftgebläses mit Wärme beaufschlagbares, anderenends eine plane Schweißfläche ausbildendes metallisches Schweißsohlenelement auf. Zum Zusammenwirken mit dem Schweißschuh weist die Schweißvorrichtung eine zum Auf- und/oder Einsetzen eines Auslassrohres des Heißluftgebläses ausgebildeten, lösbar an dem Schweißsohlenelement befestigbare Adaptereinheit auf, die einen leicht zur Vertikalen zur Schweißfläche geneigten Rohrabschnitt umfasst, welcher als Heißlufteinlass und zum Verbinden mit dem Auslassrohr eines anzuschließenden, ansonsten bekannten und bevorzugt pistolenförmig realisierten Heißluftgebläses ausgebildet ist.

Aus der europäischen Patentschrift EP 3 315 284 B1 ist zudem eine Extrusionsvorrichtung bekannt, die eine Extrudereinheit, in der in einer Förderrichtung ein Extrudat gefördert wird, wobei das Extrudat aus einer Extruderdüse der Extrudereinheit austritt, umfasst sowie weiterhin eine Heißlufteinheit mit einer Heißluftdüse, die derart angeordnet ist, dass die Heißluft neben der Extruderdüse austritt, wobei die Heißluftdüse oder die Heißlufteinheit an der Extrusionsvorrichtung um eine Längsachse der Förderrichtung der Extrudereinheit drehbar angeordnet ist, aufweist. Erfindungsgemäß ist bei dieser Extrusionsvorrichtung vorgesehen, dass für die Drehbewegung der Heißluftdüse oder der Heißlufteinheit um die Längsachse der Förderrichtung wenigstens eine Drehantriebsvorrichtung vorgesehen ist sowie Getriebemittel, angeordnet zwischen dem Drehantrieb und der drehbaren Heißluftdüse oder Heißlufteinheit.

Ein weiteres Schweißgerät, insbesondere ein Dicknaht-Schweißgerät zur Verarbeitung von thermoplastischem Kunststoff-Schweißmaterial ist aus der DE 78 15 981 U1 bekannt. Dieses umfasst ein beheizbares Schmelzrohr und ein antreibbares Förderelement, welches eine Förderkammer aufweist, an deren Anfang eine Einlassöffnung für einen Schweißdraht sowie ein den Schweißdraht zu einem Granulat umformendes Zerkleinerungsorgang vorgesehen ist, wobei der Einlassöffnung eine Transportvorrichtung für den Schweißdraht zugeordnet ist und das Schmelzrohr den Auslass aus der Förderkammer bildet.

Ausgehend von dem vorgenannten Problem der aus dem Stand der Technik bekannten Granulat-verarbeitenden Handschweißextruder besteht die Aufgabe der vorliegenden Erfindung darin, eine technische Lösung für diese Art von Handschweißextrudern zur Verfügung zu stellen, die eine Nutzung des Geräts in verschiedenen räumlichen Positionen relativ zum Werkstück, an dem eine Schweißnaht anzubringen ist, ermöglichen.

Die Lösung der vorgenannten Aufgabe liefert ein Adapter für einen Handschweißextruder mit den Merkmalen des Patentanspruchs 1 bzw. ein mit einem solchen Adapter versehener Handschweißextruder mit den Merkmalen des Patentanspruchs 8.

Erfindungsgemäß ist vorgesehen, dass der Adapter, der vorzugsweise an dem Handschweißextruder anbringbar und für die Zufuhr von Granulat zu diesem vorgesehen ist; eine, eine Flanschfläche aufweisende, Sockelplatte umfasst, die mit mindestens einer Zulauföffnung versehen und über die ein Granulat dem Handschweißextruder zuführbar ist; sowie mindestens einen an der Sockelplatte angeordneten und sich in einem spitzen Winkel von dieser erstreckenden Zulaufstutzen umfasst, wobei der Zulaufstutzen mindestens einen Zulaufkanal aufweist, dessen ein Ende mit der zumindest einen Zulauföffnung in Verbindung steht und dessen anderes Ende mit einer Öffnung eines Granulatbehälters lösbar verbindbar ist, wobei der Adapter derart ausgebildet ist, dass ein Granulatbehälter an diesem in mindestens zwei unterschiedlichen Positionen in Bezug auf die mindestens eine Zulauföffnung anbringbar ist.

Gemäß einer ersten vorteilhaften Ausführungsvariante kann der Adapter mindestens zwei in einem Winkel zueinander angeordnete Zulaufstutzen umfassen, die an der Sockelplatte angeordnet sind und sich jeweils in einem spitzen Winkel von der Sockelplatte, insbesondere in unterschiedliche Raumrichtungen, erstrecken.

In einer zweiten vorteilhaften Ausführungsvariante kann der mindestens eine Zulaufstutzen an der Sockelplatte um eine zu der Flanschfläche der Sockelplatte senkrechte Achse drehbar angeordnet sein. Hierzu kann die Sockelplatte vorteilhafterweise einen drehbar angeordneten Teller aufweisen, an dem der mindestens eine Zulaufstutzen angeordnet ist und von dem sich dieser erstreckt.

Mittels des erfindungsgemäßen Adapters hat der Benutzer somit die Möglichkeit den Freiheitsgrad eines Granulat-verarbeitenden Handschweißextruders, um mindestens eine weitere Arbeitsposition zu erweitern. Je nachdem in welcher Position er mit dem Handschweißextruder arbeiten möchte, kann er den Granulatbehälter wahlweise an dem Handschweißextruder entsprechend positionieren. Abhängig von der jeweiligen Ausführungsvariante kann er den Granulatbehälter somit über die drehbare Anordnung entsprechend positionieren und/oder wahlweise an einem der unterschiedlich ausgerichteten Zulaufstutzen des Adapters anbringen. Somit ist immer gewährleistet, dass der Granulatbehälter bei unterschiedlichen Arbeitspositionen des Handschweißextruders mit seiner Längsachse jeweils senkrecht oder in einem spitzen Winkel zur Senkrechten und ausreichend steil geneigt ausgerichtet ist, so dass das Granulat aufgrund der Einwirkung der Schwerkraft beim Arbeiten dem Gerät, insbesondere der Extruderschnecke des Handschweißextruders zugeführt werden kann.

Sofern der Adapter mindestens zwei Zulaufstutzen umfasst, so sind diese vorzugsweise derart zueinander angeordnet, dass ihre Längsachsen zueinander in einem Winkel im Bereich von 10° bis 120°, mehr bevorzugt in einem Winkel im Bereich von 30° bis 100° stehen. Weiterhin ist vorzugsweise vorgesehen, dass die mindestens zwei Zulaufstutzen sich derart von der Sockelplatte erstrecken, dass ihre Längsachsen bezogen auf eine parallel zu der Flanschfläche der Sockelplatte ausgerichtete Ebene in einem Bereich von 10° bis 80° stehen. Der Adapter weist somit in dieser Ausführungsvariante wenigstens zwei in einer relativen Position zueinander fest angeordnete Zulaufstutzen auf, in der ihre Längsachsen sich zueinander sowie in Bezug auf die Sockelplatte in einem spezifischen Winkel befinden. Auf diese Weise werden dem Benutzer wahlweise mehrere nutzbare Zulaufstutzen für das Granulat zur Verfügung gestellt, die in der jeweiligen Ausrichtung ihrer Längsachse relativ zum Gehäuse des Handschweißextruders mehr oder weniger stark variieren, so dass mit dem Gerät in unterschiedlichen Ausrichtungen relativ zu dem Werkstück, an dem eine Schweißnaht anzubringen ist, gearbeitet werden kann. Es können selbstverständlich auch drei oder mehr Zulaufstutzen an dem Adapter vorgesehen sein.

Entsprechend ist gemäß der Ausführungsvariante, in der der Adapter den mindestens einen an der Sockelplatte um eine zu der Flanschfläche der Sockelplatte senkrechte Achse drehbar angeordneten Zulaufstutzen umfasst, vorzugsweise vorgesehen, dass dieser sich derart von der Sockelplatte erstreckt, dass seine Längsachse bezogen auf eine parallel zu der Flanschfläche der Sockelplatte ausgerichtete Ebene in einem Bereich von 10° bis 80° steht. Der zumindest eine Zulaufstutzen kann, vorzugsweise über den Teller, in einem Bereich von 360° oder weniger drehbar sein.

Denjenigen Zulaufstutzen des Adapters, welcher gerade nicht im Gebrauch ist, kann der Benutzer verschließen, wobei gemäß einer Weiterbildung der Erfindung vorzugsweise mindestens ein Verschlussstopfen (Blindstopfen) vorgesehen ist, mittels dessen jeweils einer der Zulaufstutzen, an welchem kein Granulatbehälter angebracht ist, verschließbar ist. Selbstverständlich können bei Bedarf auch mehrere Zulaufstutzen parallel genutzt werden.

Um den Adapter an dem Handschweißextruder sicher zu befestigen und bei Bedarf, beispielsweise zum Zwecke der Reinigung, wieder von dem Gerät abmontieren zu können, ist gemäß einer Weiterbildung der Erfindung vorgesehen, dass die Sockelplatte Befestigungsmittel umfasst, über welche der Adapter an dem Handschweißextruder angebracht werden kann. Die Befestigungsmittel können beispielsweise in Form von Bohrungen, über die der Adapter mit dem Handschweißextruder verschraubt werden kann. Selbstverständlich kann die Sockelplatte oder alternativ der Handschweißextruder weitere dem Fachmann bekannte Befestigungsmittel aufweisen, über die der Adapter an dem Handschweißextruder sicher anbringbar ist.

Gegenstand der vorliegenden Erfindung ist neben dem zuvor beschriebenen Adapter weiterhin ein Handschweißextruder umfassend den erfindungsgemäßen Adapter, der vorteilhafterweise in einem Zuführbereich einer Extruderschnecke angeordnet ist, so dass das, beispielsweise aus einem Granulatbehälter, über den Adapter zugeführte Granulat in den hinteren Endbereich der Extruderschnecke gelangt, wo es sodann aufgeschmolzen wird und im plastifizierten Zustand über einen Schweißschuh des Handschweißextruders ausgebracht werden kann.

Bevorzugt ist in diesem Zusammenhang vorgesehen, dass der zumindest eine Zulaufstutzen oder der erste der mindestens zwei Zulaufstutzen derart zu der Extruderschnecke angeordnet ist, dass ihre Längsachsen, also die Längsachse des einen Zulaufstutzens und der Extruderschnecke, zueinander in einem spitzen Winkel, besonders bevorzugt in einem Winkel im Bereich von 10° bis 80° stehen, und/oder der zweite der mindestens zwei Zulaufstutzen des Adapters derart zu der Extruderschnecke angeordnet ist, dass ihre Längsachsen zueinander in einem Winkel im Bereich von 10° bis 120° stehen.

Dem Benutzer des erfindungsgemäßen Handschweißextruders werden somit je nach Ausführungsvariante des Adapters mehrere alternative Möglichkeiten für die Zufuhr von Granulat zur Extruderschnecke zur Verfügung gestellt. Auf diese Weise kann der Benutzer mit dem Handschweißextruder in unterschiedlichen räumlichen Positionen relativ zum Werkstück arbeiten, je nachdem wie die anzubringende Schweißnaht liegt. Gleichwohl ist in jeder dieser Positionen eine senkrechte oder nur wenig zur Senkrechten geneigte Stellung der Längsachse des an dem Adapter angebrachten Granulatbehälters gegeben, so dass das Granulat problemlos lediglich durch Einwirkung der Schwerkraft zum Eingangsbereich der Extruderschnecke gefördert wird. Eine Zwangsführung ist demnach nicht erforderlich.

Gemäß einer bevorzugten Weiterbildung der Erfindung ist der Adapter über die Flanschfläche der Sockelplatte koaxial zu der Extruderschnecke des Handschweißextruders angeordnet.

Eine bevorzugte Weiterbildung der Erfindung sieht vor, dass der Handschweißextruder zusätzlich wenigstens eine Zuführung für Kunststoffschweißdraht aufweist. Auf diese Weise ist es möglich mit dem gleichen Gerät wahlweise entweder Granulat, welches aus dem Granulatbehälter über den Adapter zugeführt wird oder alternativ Schweißdraht zu verarbeiten, welcher über eine entsprechende Einzugsvorrichtung der Extruderschnecke zugeführt wird.

Eine weitere bevorzugte Weiterbildung der Erfindung sieht vor, dass der Handschweißextruder einen Rollwagen umfasst, über den dieser verfahrbar ist. Über einen derartigen Rollwagen erhält der Benutzer des erfindungsgemäßen Handschweißextruders, insbesondere beim Setzen einer sog. Kehlnaht, eine vorteilhafte Schweißhilfe, die das Arbeiten mit dem Handschweißextruder erheblich vereinfacht. In einer Weiterbildung kann der Rollwagen zudem um die Längsachse der Extruderschnecke schwenkbar angeordnet sein, wodurch die Arbeitsposition des Handschweißextruders beim Verfahren variiert werden kann.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Figuren 1a bis 1c: eine erste Ausführungsvariante des erfindungsgemäßen Adapters in drei unterschiedlichen Darstellungen;
- Figur 1d: eine zweite Ausführungsvariante des erfindungsgemäßen Adapters;
- Figuren 2 und 3: eine Ausführungsvariante des erfindungsgemäßen Handschweißextruders, an dem der in den Figuren 1a bis 1c gezeigte Adapter angebracht ist; und
- Figur 4: eine weitere Ausführungsvariante des erfindungsgemäßen Handschweißextruders umfassend den in Figuren 1a bis 1c gezeigten Adapter.

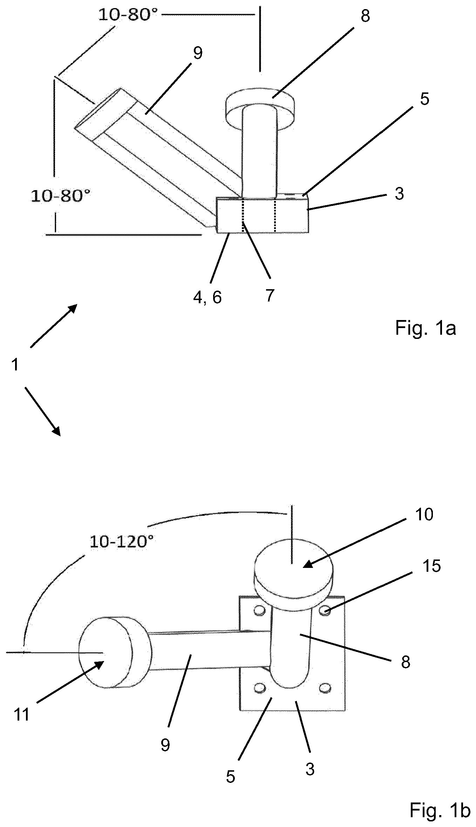

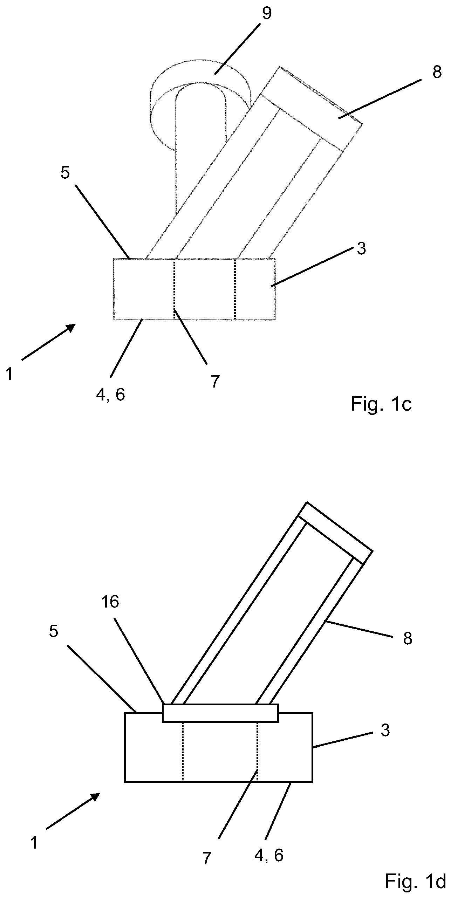

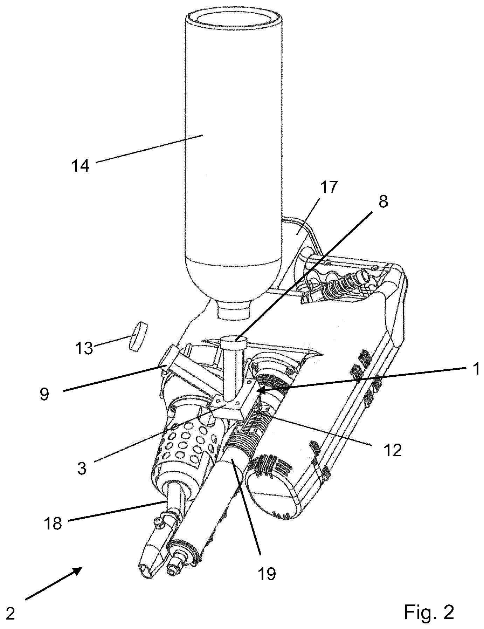

Zunächst wird auf die Figuren 1a bis c Bezug genommen und anhand dieser der Aufbau einer ersten Ausführungsvariante des erfindungsgemäßen Adapters 1 näher erläutert, der für einen Handschweißextruder 2, wie in den Figuren 2 bis 4 gezeigt, vorgesehen ist.

Der Adapter 1 umfasst in der vorliegend gezeigten Ausführungsvariante zunächst eine Sockelplatte 3, die eine Unterseite 4 sowie eine der Unterseite 4 axial gegenüberliegend angeordnete Oberseite 5 aufweist. Die Unterseite 4 bildet vorliegend eine Flanschfläche 6 aus, über die der Adapter 1 an dem Handschweißextruder 2, beispielsweise im Zulaufbereich einer Extruderschnecke, montierbar ist. An der Unterseite 4 der Sockelplatte 3 ist ferner eine Zulauföffnung 7 vorgesehen, über die ein Granulat dem Handschweißextruder 2 zuführbar ist. Die Umrissgeometrie der Sockelplatte 3 kann, wie in der vorliegenden Ausführungsvariante gezeigt, rechteckig ausgebildet sein. Sie kann aber auch variieren, so dass die Umrissgeometrie alternativ auch quadratisch, rund, oval oder unregelmäßig geformt sein kann, wobei der rechteckige Umriss bevorzugt ist.

Weiterhin weist der Adapter 1 zwei Zulaufstutzen 8, 9 auf, die an der Sockelplatte 3 über ihr jeweiliges proximales Ende angeordnet sind und sich in einem spitzen Winkel von dieser erstrecken. Die beiden Zulaufstutzen 8, 9 weisen vorliegend einen länglichen, annähernd ovalen Querschnitt auf, wobei die querseitigen Seitenwände dieser beiden Zulaufstutzen 8, 9 in den zwei sich gegenüberliegenden Bereichen jeweils abgerundet sind. Die zwischen diesen abgerundeten Bereichen angeordneten längsseitigen Seitenwände der beiden Zulaufstutzen 8, 9 verlaufen hingegen über eine gewisse Distanz geradlinig. Diese Umrissform ist jedoch nur beispielhaft und der Umriss könnte auch insgesamt rund oder eckig sein.

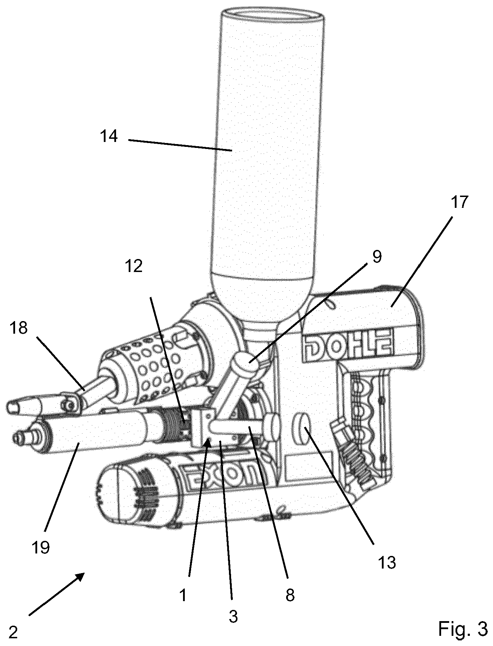

Im Inneren der beiden Zulaufstutzen 8, 9 erstrecken sich jeweils in Längsrichtung Zulaufkanäle, die in den Figuren über die Pfeile 10, 11 angedeutet sind. Über die Zulaufkanäle 10, 11, deren ein Ende mit der Zulauföffnung 7 in Verbindung steht wird das thermoplastische Granulat zum Eingangsbereich der Extruderschnecke 12 (siehe Figur 2 und 3) zugeführt. Hierzu ist jedes der distalen (in der Zeichnung oberen) Enden der Zulaufstutzen 8, 9 beispielsweise über eine Steck- oder eine Schraubverbindung mit einem einem Granulatbehälter 14 lösbar verbindbar. Das jeweils distale Ende desjenigen Zulaufstutzens 8, 9, welcher nicht genutzt wird, kann hingegen in der vorliegend dargestellten Ausführungsvariante über einen Stopfen 13 verschlossen werden, sofern der Handschweißextruder 2 mit nur einem Granulatbehälter 14 verwendet wird. Selbstverständlich ist auch eine parallele Nutzung der beiden Zulaufstutzen 8, 9 mit sodann zwei Granulatbehältern 14 möglich.

Anhand der Darstellung in Figur 1b erkennt man weiterhin die relative Position der beiden Zulaufstutzen 8, 9 des Adapters 1 in der Draufsicht auf die Sockelplatte 3. Die beiden Zulaufstutzen 8, 9 erstrecken sich von der Sockelplatte 3 aus in verschiedene Raumrichtungen. Hierbei muss man zwei Winkel zwischen den beiden Zulaufstutzen 8, 9 in den verschiedenen Betrachtungsebenen unterscheiden. In der Darstellung in Figur 1b sieht man den Winkel zwischen den beiden Zulaufstutzen 8, 9, insbesondere den Winkel zwischen deren Längsachsen. Dieser Winkel kann beispielsweise im Bereich von 10° bis 120° liegen, wie es in Figur 1b gezeigt ist. In dem gezeigten Ausführungsbeispiel liegt der Winkel beispielsweise im Bereich von etwa 90°, was jedoch nicht als einschränkend zu verstehen ist. In der Darstellung gemäß Figur 1a, die eine Seitenansicht des Adapters 1 zeigt, sind bevorzugte Winkelbereiche für die Stellung der beiden Zulaufstutzen 8, 9, insbesondere deren Längsachse in Bezug auf eine Ebene dargestellt, die parallel zu der Ebene der Flanschfläche 6 liegt. In dieser Betrachtungsebene gesehen können die Zulaufstutzen 8, 9 beispielsweise einen Winkel von jeweils 10° bis 80° einnehmen.

Wie bereits erläutert, wird der Adapter 1 über die Sockelplatte 3 an dem Handschweißextruder 2 angebracht. Hierzu weist die Sockelplatte 3 mehrere Bohrungen 15 auf, über die der Adapter 1 mit dem Handschweißextruder 2 verschraubt werden kann.

In Figur 1d ist eine weitere Ausführungsvariante eines erfindungsgemäßen Adapters 1 gezeigt, die im Unterschied zu der vorhergehenden Ausführungsvariante lediglich einen Zulaufstutzen 8 umfasst, der über einen Teller 16 an der Sockelplatte 3 angeordnet und um eine zu der Flanschfläche 6 senkrechte Achse in einem Bereich von 360° drehbar ist.

Nachfolgend wird auf die Darstellungen in den Figuren 2 bis 4 Bezug genommen, die zwei Ausführungsvarianten des Handschweißextruders 2 in unterschiedlichen Perspektiven zeigen. Der Handschweißextruder 2 umfasst zum einen ein Gehäuse 17, in dem sich Motor, Getriebe und weitere funktionelle Bauteile befinden, die an sich bekannt sind und daher hier nicht im Detail näher erläutert werden. Der Handschweißextruder 2 weist typischerweise ein Heißluftgebläse und einen Heißluftkanal 18 auf, der in der in Figur 2 gezeigten Darstellung liegenden Position neben dem Extrudergehäuse 19 angeordnet ist. Am vorderen Ende des Extrudergehäuses 19, wo das aufgeschmolzene Extrudat austritt, befindet sich üblicherweise ein hier nicht dargestellter Schweißschuh, mittels dessen die Schweißnaht ausgeführt wird. Über den Heißluftkanal 18 wird während des Schweißvorgangs Heißluft zugeführt, um auch den Bereich des Werkstücks, in dem die Schweißnaht anzubringen ist, vorzuwärmen.

Weiterhin ist anhand der Figuren die Position des Adapters 1 erkennbar, welcher mit seiner Sockelplatte 3 am Handschweißextruder 2 in einem Zuführbereich der Extruderschnecke 12, insbesondere koaxial zu dieser, angebracht ist. Man sieht in den Figuren auch die beiden Zulaufstutzen 8, 9, die jeweils zueinander, zu der Sockelplatte 3 als auch zu der Längsachse der Extruderschnecke 12 spezifisch angeordnet sind. Hierbei ist der erste der beiden Zulaufstutzen 8 des Adapters 1 derart zu der Extruderschnecke 12 angeordnet, dass ihre Längsachsen zueinander in einem spitzen Winkel stehen. In dem in der Zeichnung gezeigten Ausführungsbeispiel liegt der Winkel beispielsweise im Bereich von etwa 60°, was jedoch nicht als einschränkend zu verstehen ist. Insofern erstreckt sich der erste Zulaufstutzen 8 von der Extruderschnecke 12 zur Rückseite des Handschweißextruders 2. Der zweite der beiden Zulaufstutzen 9 des Adapters 1 ist hingegen derart zu der Extruderschnecke 12 angeordnet, dass ihre Längsachsen zueinander in einem Winkel im Bereich von 10° bis 120° stehen können. In dem vorliegenden Ausführungsbeispiel liegt der Winkel beispielsweise im Bereich von etwa 90°, was jedoch ebenfalls nicht als einschränkend zu verstehen ist.

Wenn man nun ausgehend von der Darstellung gemäß Figur 2 den Handschweißextruder aus der liegenden in eine "stehende" Arbeitsposition schwenkt (siehe Figur 3), dann liegt in dieser stehenden Arbeitsposition (mit stehendem Gehäuse 17) der Heißluftkanal 18 oberhalb des Extrudergehäuses 19. In dieser Arbeitsposition gemäß Figur 3 liegt dann der erste Zulaufstutzen 8 annähernd waagrecht und würde sich demnach nicht für die Anbringung eines Granulatbehälters 14 eignen, da sodann das in diesem befindlichen Granulat nicht aufgrund der Schwerkraft nachrieseln würde. Daher wird in einer Arbeitsposition des Handschweißextruders 2 der Granulatbehälter 14 an dem Zulaufstutzen 9 angebracht, der dann annähernd senkrecht steht, so dass das im Granulatbehälter 14 befindliche Granulat unter der Einwirkung der Schwerkraft gut nachrieselt und somit kontinuierlich der Extruderschnecke 12 ohne Zwangsführung zugeführt werden kann.

Grundsätzlich können auch mehr als zwei Zulaufstutzen 8, 9 an dem Adapter 1 angebracht sein, so dass man je nach Bedarf in verschiedenen Arbeitspositionen mit dem Handschweißextruder 2 arbeiten kann. Der mindestens eine Granulatbehälter 14 oder mehrere davon kann immer so an dem Adapter 1 angebracht werden, dass er annähernd senkrecht oder zumindest in einem ausreichend steilen Winkel steht und das Granulat aufgrund der Schwerkraft von selbst nachrieselt.

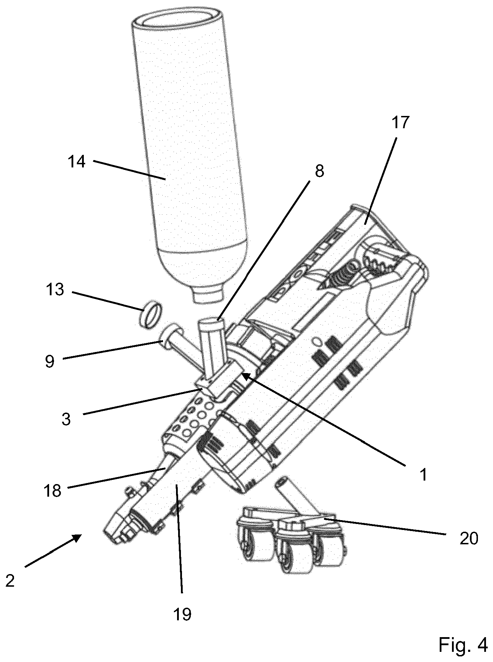

In Figur 4 ist eine weitere Ausführungsvariante des Handschweißextruders 2 gezeigt, die im Unterschied zu der vorhergehenden Ausführungsvariante einen Rollwagen 20 umfasst. Über den Rollwagen 20 kann der Handschweißextruder 2 in einer spezifischen Arbeitsposition verfahren werden, wodurch der Benutzer, insbesondere beim Setzen einer sog. Kehlnaht, eine vorteilhafte Schweißhilfe erhält.

### Bezugszeichen

- 1: Adapter
- 2: Handschweißextruder
- 3: Sockelplatte
- 4: Unterseite
- 5: Oberseite
- 6: Flanschfläche
- 7: Zulauföffnung
- 8: erster Zulaufstutzen
- 9: zweiter Zulaufstutzen
- 10: Pfeil / erster Zulaufkanal
- 11: Pfeil / zweiter Zulaufkanal
- 12: Extruderschnecke
- 13: Stopfen
- 14: Granulatbehälter
- 15: Bohrungen
- 16: Teller
- 17: Gehäuse
- 18: Heißluftkanal
- 19: Extrudergehäuse
- 20: Rollwagen

## Patentansprüche

1. Adapter (1) für einen Handschweißextruder (2), der an dem Handschweißextruder (2) anbringbar und für die Zufuhr von Granulat zu diesem vorgesehen ist, umfassend: eine, eine Flanschfläche (6) aufweisende, Sockelplatte (3), die mit mindestens einer Zulauföffnung (7) versehen ist und über die ein Granulat dem Handschweißextruder (2) zuführbar ist; sowie mindestens einen an der Sockelplatte (3) angeordneten und sich in einem spitzen Winkel von dieser erstreckenden Zulaufstutzen (8), wobei der Zulaufstutzen (8) mindestens einen Zulaufkanal (10) aufweist, dessen ein Ende mit der zumindest einen Zulauföffnung (7) in Verbindung steht und dessen anderes Ende mit einer Öffnung eines Granulatbehälters (14) lösbar verbindbar ist, wobei der Adapter (1) derart ausgebildet ist, dass ein Granulatbehälter (14) an diesem in mindestens zwei unterschiedlichen Positionen in Bezug auf die mindestens eine Zulauföffnung (7) anbringbar ist.

2. Adapter (1) nach Anspruch 1, wobei dieser mindestens zwei in einem Winkel zueinander angeordnete Zulaufstutzen (8, 9) umfasst, die an der Sockelplatte (3) angeordnet sind und sich jeweils in einem spitzen Winkel von dieser, vorzugsweise in unterschiedliche Raumrichtungen, erstrecken.

3. Adapter (1) nach Anspruch 2, wobei die mindestens zwei Zulaufstutzen (8, 9) derart zueinander angeordnet sind, dass ihre Längsachsen zueinander in einem Winkel im Bereich von 10° bis 120°, vorzugsweise in einem Winkel im Bereich von 30° bis 100° stehen.

4. Adapter (1) nach Anspruch 2 oder 3, wobei die mindestens zwei Zulaufstutzen (8, 9) sich derart von der Sockelplatte (3) erstrecken, dass ihre Längsachsen bezogen auf eine parallel zu der Flanschfläche (6) der Sockelplatte (3) ausgerichtete Ebene in einem Bereich von 10° bis 80° stehen.

5. Adapter (1) nach Anspruch 1, wobei der mindestens eine Zulaufstutzen (8) an der Sockelplatte (3) um eine zu der Flanschfläche (6) senkrechte Achse drehbar angeordnet ist.

6. Adapter (1) nach Anspruch 5, wobei die Sockelplatte (3) einen drehbar angeordneten Teller (16) aufweist, an dem der mindestens eine Zulaufstutzen (8) angeordnet ist und von dem sich dieser erstreckt.

7. Adapter (1) nach einem der vorhergehenden Ansprüche, wobei die Sockelplatte (3) Befestigungsmittel umfasst, über welche der Adapter (1) an dem Handschweißextruder (2) anbringbar ist.

8. Handschweißextruder (2), umfassend einen Adapter (1) nach einem der vorhergehenden Ansprüche 1 bis 7.

9. Handschweißextruder (2) nach Anspruch 8, wobei der erste der mindestens zwei Zulaufstutzen (8) des Adapters (1) derart zu einer Extruderschnecke (12) des Handschweißextruders (2) angeordnet ist, dass ihre Längsachsen zueinander in einem spitzen Winkel, vorzugsweise in einem Winkel im Bereich von 10° bis 80° stehen; und wobei der zweite der mindestens zwei Zulaufstutzen (9) des Adapters (1) derart zu der Extruderschnecke (12) angeordnet ist, dass ihre Längsachsen zueinander in einem Winkel im Bereich von 10° bis 120° stehen

10. Handschweißextruder (2) nach Anspruch 8 oder 9, wobei der Adapter (1) in einem Zuführbereich einer Extruderschnecke (12) angeordnet ist.

11. Handschweißextruder (2) nach einem der vorhergehenden Ansprüche 8 bis 10, wobei der Adapter (1) mit seiner Flanschfläche (6) koaxial zu der Extruderschnecke (12) des Handschweißextruders (2) angeordnet ist.

12. Handschweißextruder (2) nach einem der vorhergehenden Ansprüche 8 bis 11, wobei dieser zusätzlich wenigstens eine Zuführung für Kunststoffschweißdraht aufweist.

13. Handschweißextruder (2) nach einem der vorhergehenden Ansprüche 8 bis 12, weiter umfassend einen Rollwagen (20), über den der Handschweißextruder (2) verfahrbar ist.

14. Handschweißextruder (2) nach Anspruch 13, wobei der Rollwagen (20) um die Längsachse der Extruderschnecke (12) schwenkbar angeordnet ist.

## Claims

1. An adapter (1) for a hand welding extruder (2) which can be attached to the hand welding extruder (2) and is provided for supplying granular material to the same, comprising: a base plate (3) having a flange surface (6), which is provided with at least one inlet opening (7) and by means of which a granular material can be supplied to the hand welding extruder (2); and at least one inlet tube (8) arranged on the base plate (3) and extending at an acute angle from the same, wherein the inlet tube (8) has at least one inlet channel (10), one end of which is connected to the at least one inlet opening (7) and the other end of which can be connected in a detachable manner to an opening of a granular material container (14), wherein the adapter (1) is designed such that a granular material container (14) can be attached to the same in at least two different positions in relation to the at least one inlet opening (7).

2. The adapter (1) according to Claim 1, wherein this comprises at least two inlet tubes (8, 9), which are arranged at an angle to one another and which are arranged on the base plate (3) and extend in each case at an acute angle from the same, preferably in different spatial directions.

3. The adapter (1) according to Claim 2, wherein the at least two inlet tubes (8, 9) are arranged in such a manner in relation to one another that their longitudinal axes are at an angle to one another in a range of 10° to 120°, preferably at an angle in a range of 30° to 100°.

4. The adapter (1) according to Claim 2 or 3, wherein the at least two inlet tubes (8, 9) extend from the base plate (3) such that their longitudinal axes are in a range of 10° to 80° in relation to a plane that is aligned parallel to the flange surface (6) of the base plate (3).

5. The adapter (1) according to Claim 1, wherein the at least one inlet tube (8) is arranged on the base plate (3) in a rotatable manner about an axis perpendicular to the flange surface (6).

6. The adapter (1) according to Claim 5, wherein the base plate (3) has a plate (16), which is arranged in a rotatable manner, on which plate the at least one inlet tube (8) is arranged and from which plate this inlet tube extends.

7. The adapter (1) according to one of the preceding claims, wherein the base plate (3) comprises fastening means, by means of which the adapter (1) can be attached to the hand welding extruder (2).

8. A hand welding extruder (2), comprising an adapter (1) according to one of the preceding Claims 1 to 7.

9. The hand welding extruder (2) according to Claim 8, wherein the first of the at least two inlet tubes (8) of the adapter (1) is arranged in such a manner in relation to an extruder screw (12) of the hand welding extruder (2) that their longitudinal axes are at an acute angle, preferably at an angle to one another in the range of 10° to 80°; and wherein the second of the at least two inlet tubes (9) of the adapter (1) is arranged in such a manner in relation to the extruder screw (12) that their longitudinal axes are at an angle to one another in the range of 10° to 120°.

10. The hand welding extruder (2) according to Claim 8 or 9, wherein the adapter (1) is arranged in a feed region of an extruder screw (12).

11. The hand welding extruder (2) according to one of the preceding Claims 8 to 10, wherein the flange surface (6) of the adapter (1) is arranged coaxially to the extruder screw (12) of the hand welding extruder (2).

12. The hand welding extruder (2) according to one of the preceding Claims 8 to 11, wherein this additionally has at least one feed for plastic welding rod.

13. The hand welding extruder (2) according to one of the preceding Claims 8 to 12, further comprising a trolley (20), by means of which the hand welding extruder (2) can be moved.

14. The hand welding extruder (2) according to Claim 13, wherein the trolley (20) is arranged in a pivotable manner about the longitudinal axis of the extruder screw (12).

## Revendications

1. Adaptateur (1) pour extrudeuse de soudage à la main (2), pouvant être fixé à l'extrudeuse de soudage à la main (2) et qui est prévu pour l'alimentation en granulés de cette dernière, comprenant : une plaque de base (3) dotée d'une surface de bride (6), qui est pourvue d'au moins une ouverture d'entrée (7) et via laquelle l'extrudeuse de soudage à la main(2) peut être alimentée en granulés ; et au moins une buse d'entrée (8) disposée sur la plaque de base (3) et s'étendant à angle aigu depuis celle-ci, dans lequel la buse d'entrée (8) présente au moins un canal d'entrée (10), dont une extrémité est reliée à au moins une ouverture d'entrée (7) et dont l'autre extrémité peut être reliée de manière amovible à l'ouverture d'un réservoir à granulés (14), dans lequel l'adaptateur (1) est conçu de manière à permettre la fixation d'un réservoir à granulés (14) sur ce dernier dans au moins deux positions différentes par rapport à au moins une ouverture d'entrée (7).

2. Adaptateur (1) selon la revendication 1, dans lequel ce dernier comprend au moins deux buses d'entrée (8, 9) disposées à un angle l'une par rapport à l'autre, qui sont disposées sur la plaque de base (3) et s'étendent respectivement à un angle aigu depuis celle-ci, de préférence dans des directions spatiales différentes.

3. Adaptateur (1) selon la revendication 2, dans lequel les deux buses d'entrée (8, 9) sont disposées l'une par rapport à l'autre de telle sorte que leurs axes longitudinaux forment un angle compris entre 10° et 120°, de préférence un angle compris entre 30° et 100°.

4. Adaptateur (1) selon la revendication 2 ou 3, dans lequel les deux buses d'entrée (8, 9) s'étendent depuis la plaque de base (3), de telle sorte que leurs axes longitudinaux forment un angle compris entre 10° et 80° par rapport à un plan parallèle à la surface de bride (6) de la plaque de base (3).

5. Adaptateur (1) selon la revendication 1, dans lequel au moins une buse d'entrée (8) est disposée sur la plaque de base (3) de manière à pouvoir tourner autour d'un axe perpendiculaire à la surface de bride (6).

6. Adaptateur (1) selon la revendication 5, dans lequel la plaque de base (3) présente une plaque rotative (16), sur laquelle au moins une buse d'entrée (8) est disposée et à partir de laquelle cette dernière s'étend.

7. Adaptateur (1) selon une quelconque des revendications précédentes, dans lequel la plaque de base (3) comprend des moyens de fixation permettant de fixer l'adaptateur (1) à l'extrudeuse de soudage à la main (2).

8. Extrudeuse de soudage à la main (2), comprenant un adaptateur (1) selon une quelconque des revendications 1 à 7.

9. Extrudeuse de soudage à la main (2) selon la revendication 8, dans laquelle la première des au moins deux buses d'entrée (8) de l'adaptateur (1) est disposée par rapport à une vis d'extrudeuse (12) de l'extrudeuse de soudage à la main (2) de telle sorte que leurs axes longitudinaux forment un angle aigu, de préférence compris entre 10° et 80° ; et dans laquelle la deuxième des au moins deux buses d'entrée (9) de l'adaptateur (1) est disposée par rapport à la vis d'extrudeuse (12) de telle sorte que leurs axes longitudinaux forment un angle compris entre 10° et 120°.

10. Extrudeuse de soudage à la main (2) selon la revendication 8 ou 9, dans laquelle l'adaptateur (1) est disposé dans une zone d'alimentation d'une vis d'extrudeuse (12).

11. Extrudeuse de soudage à la main (2) selon une des revendications 8 à 10, dans laquelle l'adaptateur (1) est disposé avec sa surface de bride (6) coaxiale à la vis d'extrusion (12) de l'extrudeuse de soudage à la main (2).

12. Extrudeuse de soudage à la main (2) selon une des revendications 8 à 11, dans laquelle cette dernière présente en outre au moins une alimentation pour fil de soudage plastique.

13. Extrudeuse de soudage à la main (2) selon une quelconque des revendications 8 à 12, comprenant en outre un chariot (20), sur lequel l'extrudeuse de soudage à la main (2) peut être déplacée.

14. Extrudeuse de soudage à la main (2) selon la revendication 13, dans laquelle le chariot (20) est disposé pour pivoter autour de l'axe longitudinal de la vis d'extrusion (12).
